# EUROPEAN PATENT APPLICATION

(11) **EP 2 725 259 A1**
(43) Date of publication of application: **30.04.2014**
(21) Application number: 12802391.8
(22) Date of filing: 15.06.2012
(51) Int. Cl.: F16H 1/32, F16H 48/08, F16H 57/032

(54) **MOTOR DRIVE FORCE TRANSMISSION DEVICE**

(30) Priority: 24.06.2011 JP 2011140611; 05.03.2012 JP 2012048065
(71) Applicant: JTEKT Corporation, Osaka-shi, Osaka 542-8502 (JP)
(72) Inventor: TAKAI Tomoyoshi, Osaka-shi Osaka 542-8502 (JP); TAKUNO Hiroshi, Osaka-shi Osaka 542-8502 (JP); SUZUKI Kunihiko, Osaka-shi Osaka 542-8502 (JP); NOMURA Keita, Osaka-shi Osaka 542-8502 (JP); KORENAGA Kenji, Osaka-shi Osaka 542-8502 (JP); KOBAYASHI Tsune, Osaka-shi Osaka 542-8502 (JP); ONOZAKI Tohru, Osaka-shi Osaka 542-8502 (JP); TAGAMI Masaharu, Osaka-shi Osaka 542-8502 (JP)
(74) Representative: TBK
(86) International application number: PCT/JP2012/065353
(87) International publication number: WO 2012/176707

(57) **Abstract**

A motor driving force transmission system with which generation of NV can be suppressed is provided.

A motor driving force transmission system 1 includes an electric motor 4 that generates motor torque for actuating a differential mechanism portion and outputs the motor torque, and that has a motor shaft 42 with eccentric portions, and a bearing mechanism including a ball bearing 34 interposed between one-side axial end portion of a housing 2 and one-side axial end portion of a differential case 30, a ball bearing 35 interposed between the other-side axial end portion of the differential case 30 and one-side axial end portion of the motor shaft 42, and a ball bearing 46 interposed between the other-side axial end portion of the housing 2 and the other-side axial end portion of the motor shaft 42. An axial load is applied to the ball bearings 34, 35, 46 of the bearing mechanism by a spring 48.

## Description

### TECHNICAL FIELD

The invention relates to a motor driving force transmission system that is suitable for use in an electric automobile including an electric motor as a drive source, for example.

### BACKGROUND ART

Some conventional motor driving force transmission systems include an electric motor that generates motor torque, and a reduction-transmission mechanism that transmits a driving force based on the motor torque of the electric motor to a differential mechanism, and is mounted in an automobile (refer to, for example, Patent Document 1).

An electric motor includes a motor shaft that is rotated by electric power from an in-vehicle battery, and is arranged on the axis of a reduction-transmission mechanism.

The reduction-transmission mechanism includes a shaft portion (rotary shaft) that is spline-fitted to the motor shaft of the electric motor, and a pair of reduction-transmission portions provided around the rotary shaft, arranged so as to be interposed between the electric motor and a differential mechanism (differential case), and is coupled to the motor shaft and the differential case. In addition, the reduction-transmission mechanism is accommodated in a housing together with the electric motor and the differential mechanism. One of the reduction-transmission mechanisms is coupled to the motor shaft, and the other one of the reduction-transmission mechanisms is coupled to the differential case.

With the above-described configuration, the motor shaft of the electric motor is rotated by the electric power from the in-vehicle battery, and accordingly, the motor torque is transmitted from the electric motor via the reduction-transmission mechanism to the differential mechanism, and distributed to right and left wheels from the differential mechanism.

Meanwhile, in the motor driving force transmission system of this type, one-side end portion (end portion close to a coupled portion that is spline-fitted to the rotary shaft of the reduction-transmission mechanism) and the other-side end portion of the motor shaft of the electric motor are rotatably supported by the housing via ball bearings.

One-side end portion of the differential case of the differential mechanism and the other-side end portion of the differential case of the differential mechanism are rotatably supported respectively by the housing and the rotary shaft of the reduction-transmission mechanism via respective ball bearings.

### PRIOR ART DOCUMENT

### PATENT DOCUMENT

[Patent Document 1] Japanese Patent Application Publication No. 2007-218407

### SUMMARY OF THE INVENTION

### PROBLEM TO BE SOLVED BY THE INVENTION

However, in the motor driving force transmission system indicated in Patent Document 1, a radial clearance is present between the motor shaft of the electric motor and the rotary shaft of the reduction-transmission mechanism, and not only a radial clearance but also an axial clearance is present in each ball bearing, which raises a possibility that noise vibration (NV: Noise Vibration) will be generated due to these clearances.

Therefore, an object of the invention is to provide a motor driving force transmission system with which generation of NV can be suppressed.

### MEANS FOR SOLVING THE PROBLEM

In order to achieve the above-described object, the invention provides motor driving force transmission systems according to (1) to (8).
(1) A motor driving force transmission system includes: an electric motor that generates motor torque, and that has a motor shaft with an eccentric portion; a reduction-transmission mechanism that is arranged on an outer periphery of the eccentric portion of the motor shaft, and that reduces a speed of the motor torque; a differential mechanism that includes a differential mechanism portion that distributes the motor torque with a reduced speed, and a differential case that accommodates the differential mechanism portion; a housing that accommodates the reduction-transmission mechanism, the electric motor, and the differential mechanism; and a bearing mechanism by which the motor shaft and the differential case are coaxially and rotatably supported, wherein the bearing mechanism includes a first rolling bearing interposed between one-side axial end portion of the housing and one-side axial end portion of the differential case, a second rolling bearing interposed between the other-side axial end portion of the differential case and one-side axial end portion of the motor shaft, and a third rolling bearing interposed between the other-side axial end portion of the housing and the other-side axial end portion of the motor shaft, and an axial load is applied to the first rolling bearing, the second rolling bearing, and the third rolling bearing of the bearing mechanism.
(2) In the motor driving force transmission system according to the above description (1), each of the first rolling bearing, the second rolling bearing and the third rolling bearing has an outer ring, and a spring having a spring force that serves as the axial load is arranged at at least one of positions between the outer ring of the first rolling bearing and the housing, between the outer ring of the second rolling bearing and the differential case, and between the outer ring of the third rolling bearing and the housing.
(3) In the motor driving force transmission system according to the above description (1), each of the first rolling bearing, the second rolling bearing and the third rolling bearing has an inner ring, and a spring having a spring force that serves as the axial load is arranged at at least one of positions between the inner ring of the first rolling bearing and the differential case, between the inner ring of the second rolling bearing and the motor shaft, and between the inner ring of the third rolling bearing and the motor shaft.
(4) In the motor driving force transmission system according to any one of the above descriptions (1) to (3), the housing is formed of at least two housing elements that are arranged next to each other in an axial direction thereof, and the axial load is applied by adjusting an axial length through fastening of the at least two housing elements.
(5) In the motor driving force transmission system according to the above description (1), the reduction-transmission mechanism includes an input member formed of an external gear that makes circular motion with a predetermined eccentric amount upon reception of the motor torque, a rotation force applying member that is formed of an internal gear that meshes with the input member, with teeth the number of which is larger than the number of teeth of the input member, and an output member that receives a rotation force applied to the input member by the rotation force applying member and outputs the rotation force to the differential case as torque of the differential case, the housing includes a first housing element that accommodates the differential mechanism and a second housing element that accommodates the electric motor, and the first housing element and the second housing element are arranged next to each other in an axial direction of the electric motor via the rotation force applying member.
(6) In the motor driving force transmission system according to the above description (5), a linear expansion coefficient of the rotation force applying member is set to a linear expansion coefficient that is closer to a linear expansion coefficient of the input member than a linear expansion coefficient of each of the first housing element and the second housing element.
(7) In the motor driving force transmission system according to the above description (5), a linear expansion coefficient of each of the input member, the rotation force applying member and the output member is set to substantially the same linear expansion coefficient as a linear expansion coefficient of the differential case.
(8) In the motor driving force transmission system according to the above description (6), a linear expansion coefficient of each of the input member, the rotation force applying member and the output member is set to substantially the same linear expansion coefficient as a linear expansion coefficient of the differential case.
(9) In the motor driving force transmission system according to any one of the above descriptions (5) to (8), both axial ends of the rotation force applying member respectively have a pair of fitting portions, and one axial end of the first housing element has a first fitted portion that is fitted to one of the pair of the fitting portions, and the other axial end of the second housing element has a second fitted portion that is fitted to the other one of the pair of the fitting portions.

### EFFECT OF THE INVENTION

According to the invention, it is possible to suppress generation of NV.

### BRIEF DESCRIPTION OF THE DRAWINGS

[FIG. 1] FIG. 1 is a schematic plan view of a vehicle in which a motor driving force transmission system according to a first embodiment of the invention is mounted.
[FIG. 2] FIG. 2 is a sectional view of the motor driving force transmission system according to the first embodiment of the invention.
[FIG. 3] FIG. 3 is a sectional view of a reduction-transmission mechanism of the motor driving force transmission system according to the first embodiment of the invention.
[FIG. 4] FIG. 4 is an enlarged sectional view of a portion M of the motor driving force transmission system according to the first embodiment of the invention.
[FIG. 5] FIG. 5 is a sectional view of a motor driving force transmission system according to a second embodiment of the invention.
[FIG. 6] FIG. 6 is an enlarged sectional view of a portion N of the motor driving force transmission system according to the second embodiment of the invention.
[FIG. 7] FIG. 7 is a sectional view of a motor driving force transmission system according to a third embodiment of the invention.
[FIG. 8] FIG. 8 is a sectional view illustrating the state of fitting between a rotation force generating member and a housing in a reduction-transmission mechanism of a motor driving force transmission system according to a fourth embodiment of the invention.
[FIG. 9] FIG. 9 is a sectional view illustrating the state of fitting between a rotation force generating member and a housing in a reduction-transmission mechanism of a motor driving force transmission system according to a fifth embodiment of the invention.
[FIG. 10] FIG. 10 is a sectional view illustrating the state of fitting between a rotation force generating member and a housing in a reduction-transmission mechanism of a motor driving force transmission system according to a sixth embodiment of the invention.

### MODES FOR CARRYING OUT THE INVENTION

### [FIRST EMBODIMENT]

Hereinafter, a motor driving force transmission system according to a first embodiment of the invention will be described in detail with reference to the drawings.

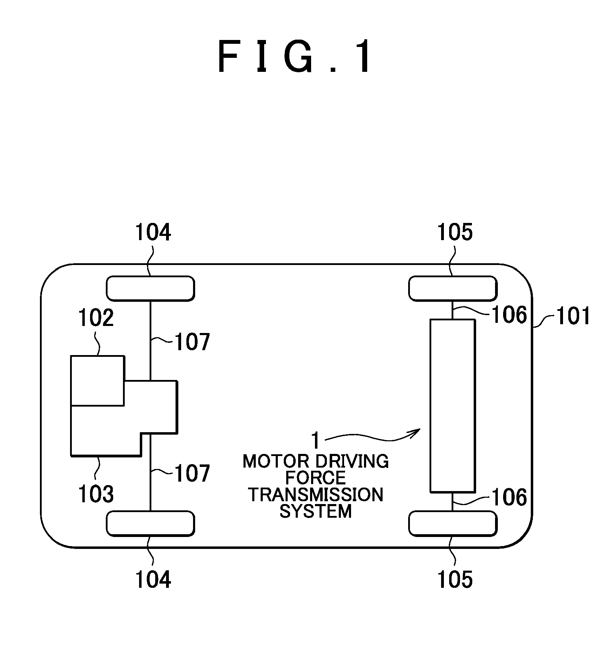

FIG. 1 schematically illustrates a four-wheel-drive vehicle. As illustrated in FIG. 1, in a four-wheel-drive vehicle 101, a front wheel side power system in which an engine serves as a drive source, and a rear wheel side power system in which an electric motor serves as a drive source are used, and the four-wheel-drive vehicle 101 includes a motor driving force transmission system 1, an engine 102, a transaxle 103, a pair of front wheels 104, and a pair of rear wheels 105.

The motor driving force transmission system 1 is arranged in the rear wheel side power system in the four-wheel-drive vehicle 101, and is supported by a vehicle body (not illustrated) of the four-wheel-drive vehicle 101.

Further, the motor driving force transmission system 1 is configured such that a driving force based on a motor torque of an electric motor 4 (described later) can be transmitted to the pair of the rear wheels 105. Thus, the motor torque of the electric motor 4 is output to rear axle shafts 106 via a reduction-transmission mechanism 5 and a rear differential 3 (both will be described later), and the pair of the rear wheels 105 is driven. The details of the motor driving force transmission system 1 and the like will be described later.

The engine 102 is arranged in the front wheel side power system in the four-wheel-drive vehicle 101. Thus, the driving force of the engine 102 is output to front axle shafts 107 via the transaxle 103, and the pair of the front wheels 104 is driven.

### (Overall Configuration of Motor Driving Force Transmission System 1)

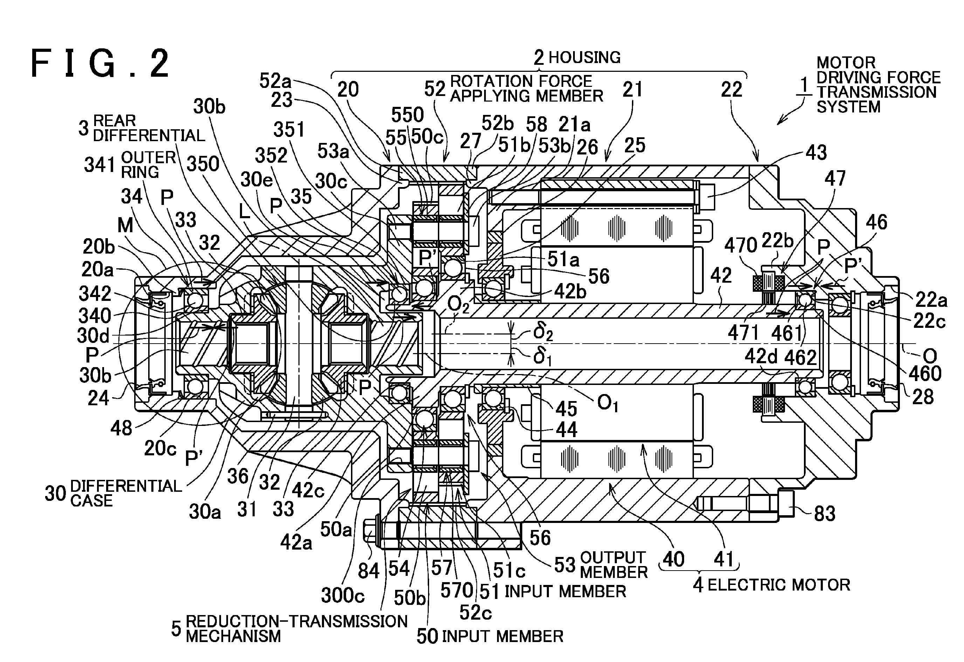

FIG. 2 illustrates the entirety of the motor driving force transmission system. As illustrated in FIG. 2, the motor driving force transmission system 1 is formed mainly of a housing 2 that has an axis O that is coaxial with an axis of each of the rear axle shafts 106 (illustrated in FIG. 1), the rear differential 3 that distributes the driving force based on the motor torque to the rear wheels 105 (illustrated in FIG. 1), the electric motor 4 that generates motor torque, and the reduction-transmission mechanism 5 that reduces the speed of the motor torque of the electric motor 4 and transmits it to the rear differential 3.

### (Configuration of Housing 2)

The housing 2 has a first housing element 20 that accommodates the rear differential 3, a rotation force applying member 52, a second housing element 21 that accommodates the electric motor 4, and a third housing element 22 that closes one-side opening portion (an opening portion located on a side opposite from a first housing element 20-side opening portion) of the second housing element 21, which are arranged in this order, and is arranged in the vehicle body. As a material of the housing 2, an Al (aluminum)-based die-cast material (ADC 12) having a linear expansion coefficient of, for example, approximately 21.5 x 10⁻⁶/°C is used, except for the rotation force applying member 52 (component of the housing 2). Thus, as compared with a case where, for example, a ferrous die-cast material is used for all the components of the housing 2, weight reduction of the system as a whole can be promoted.

The first housing element 20 is a bottomed cylindrical member with steps, which is arranged at one axial side (left side in FIG. 1) of the housing 2, and which opens toward the second housing element 21. In a bottom portion of the first housing element 20, there are formed a shaft insertion hole 20a through which the rear axle shaft 106 (illustrated in FIG. 1) is passed, and an inward flange 20b located on the inner peripheral face of the shaft insertion hole 20a and protruding radially inward. In the inward flange 20b, there is formed an annular cutout 20c that opens toward a second housing element 21-side flange end face among the both flange end faces and toward the inside of the shaft insertion hole 20a. An annular protruding portion 23 that protrudes toward the second housing element 21 is formed integrally with an opening end face of the first housing element 20. The outer peripheral face of the protruding portion 23 is formed as a circumferential surface having an outer diameter that is smaller than the maximum outer diameter of the first housing element 20 and of which the central axis coincides with the axis O. A seal member 24 is arranged so as to be interposed between the inner peripheral face of the first housing element 20 and the outer peripheral face of the rear axle shaft 106. The seal member 24 is formed in an annular shape, is fitted to the inner peripheral face of the first housing element 20, and slides on the outer peripheral face of the rear axle shaft 106. The seal member 24 separates the space inside the housing 2 and the space outside the seal member 24 from each other.

The second housing element 21 is a cylindrical member with no bottom that is arranged at an axial intermediate portion of the housing 2 and that opens toward both sides in the direction of the axis O. A stepped inward flange 21a located between the electric motor 4 and the reduction-transmission mechanism 5 is formed integrally with a first housing element 20-side opening portion of the second housing element 21. An annular member 25 to which a race is fitted to the inner peripheral face of the inward flange 21a via an annular spacer 26. An annular protruding portion 27 that protrudes toward the first housing element 20 is formed integrally with a first housing element 20-side opening end face of the second housing element 21. The outer peripheral face of the protruding portion 27 is formed as a circumferential surface that has an outer diameter that is smaller than the maximum outer diameter of the second housing element 21 and substantially equal to the outer diameter of the protruding portion 23, and of which the central axis coincides with the axis O.

The third housing element 22 is a bottomed cylindrical member with steps that is arranged at the other axial side of the housing 2 and that opens toward the second housing element 21. In a bottom portion of the third housing element 22, there is formed a shaft insertion hole 22a through which the rear axle shaft 106 is passed. A cylindrical portion 22b to which a stator is fitted and which protrudes toward the electric motor 4 is formed integrally with an inner opening peripheral edge of the shaft insertion hole 22a. A seal member 28 is arranged so as to be interposed between the inner peripheral face of the third housing element 22 and the outer peripheral face of the rear axle shaft 106. The third housing element 22 has an annular step face 22c that restricts movement of a ball bearing 46 (an outer ring 461), which serves as a third rolling bearing that constitutes a bearing mechanism according to the invention together with ball bearings 34, 35, toward the side opposite from the reduction-transmission mechanism 5. The seal member 28 is formed in an annular shape, is fixed to the inner peripheral face of the third housing element 22, and slides on the outer peripheral face of the rear axle shaft 106. The seal member 28 separates the space inside the housing 2 and the space outside the seal member 28 from each other.

### (Configuration of Rear Differential 3)

The rear differential 3 is a bevel gear-type differential mechanism that includes a differential case 30, a pinion gear shaft 31, a pair of pinion gears 32, and a pair of side gears 33, and is arranged at one side of the motor driving force transmission system 1.

Thus, the torque of the differential case 30 is distributed from the pinion gear shaft 31 to the side gears 33 via the pinion gears 32, and is then transmitted from the rear axle shafts 106 (illustrated in FIG. 1) to the right and left rear wheels 105 (illustrated in FIG. 1).

Meanwhile, when there arises a difference in driving resistance between the right and left rear wheels 105, the torque of the differential case 30 is differentially distributed to the right and left rear wheels 105 by the rotations of the pinion gears 32.

The differential case 30 is arranged on the axis O, and is rotatably supported by the first housing element 20 via the ball bearing 34 (first rolling bearing), and is rotatably supported by a motor shaft 42 of the electric motor 4 via the ball bearing 35 (second rolling bearing). The differential case 30 is configured to rotate about the axis O upon reception of driving force based on the motor torque of the electric motor 4 from the reduction-transmission mechanism 5. As a material of the differential case 30, a ferrous die-cast material (FCD 450) having a linear expansion coefficient of, for example, approximately 12 × 10⁻⁶/°C is used. Alternatively, a differential case may be formed of a material made of a steel material (S35C) such as carbon steels for machine structural use, which has a linear expansion coefficient of, for example, approximately 12 × 10⁻⁶/°C.

The differential case 30 has an accommodation space 30a that accommodates a differential mechanism portion (the pinion gear shaft 31, the pinion gears 32 and the side gears 33), and a pair of shaft insertion holes 30b that communicate with the accommodation space 30a. The right and left rear axle shafts 106 are respectively passed through the pair of the shaft insertions holes 30b.

In addition, an annular flange 30c that faces the reduction-transmission mechanism 5 is formed integrally with the differential case 30. Multiple (six, in the present embodiment) pin fitting holes 300c are formed in the flange 30c at equal intervals in the circumferential direction around the axis O. An annular step face 30d that restricts movement of the ball bearing 34 (an inner ring 340) toward the motor shaft 42 is formed at one-side axial end portion of the differential case 30, and an annular recess hole 30e that opens toward the reduction-transmission mechanism 5 is formed at the other-side axial end portion of the differential case 30. An annular step face 300e that restricts movement of the ball bearing 35 (an outer ring 351) toward the differential case 30 is formed in the recess hole 30e.

The ball bearing 34 includes inner and outer two bearing rings 340, 341 (the inner ring 340 and the outer ring 341) that are arranged next to each other respectively at inner and outer peripheral portions of the ball bearing 34, and rolling elements 342 that roll between the inner ring 340 and the outer ring 341, and is arranged so as to be interposed between the inner peripheral face of the shaft insertion hole 20a of the first housing element 20 and the outer peripheral face of the one-side axial end portion of the differential case 30.

The inner ring 340 is fitted to the outer peripheral face of the one-side axial end portion of the differential case 30 by interference fit in such a manner that one-side end face is exposed to the inside of the shaft insertion hole 20a of the first housing element 20, and the other-side end face is in contact with the step face 30d of the differential case 30.

The outer ring 341 is fitted to the inner peripheral face of the shaft insertion hole 20a by clearance fit in such a manner that one-side end face is in contact with the bottom face of the cutout 20c of the first housing element 20 (the motor shaft 42-side flange end face of the inward flange 20b) via a spring 48 and the other-side end face is exposed to the inside of the shaft insertion hole 20a of the first housing element 20.

The rolling elements 342 are arranged so as to be interposed between the inner ring 340 and the outer ring 341, and rollably held by a cage (not illustrated).

Similarly, the ball bearing 35 includes inner and outer two bearing rings 350, 351 (the inner ring 350 and the outer ring 351) that are arranged next to each other respectively at inner and outer peripheral portions of the ball bearing 35, and rolling elements 352 that roll between the inner ring 350 and the outer ring 351, and is arranged so as to be interposed between the inner peripheral face of the recess hole 30e of the differential case 30 and the outer peripheral face of the one-side axial end portion of the motor shaft 42.

The inner ring 350 is fitted to the outer peripheral face of one-side axial end portion of the motor shaft 42 by interference fit in such a manner that one-side end face is exposed to the inside of the recess hole 30e of the differential case 30, and the other-side end face is in contact with a step face 42c (described later) of the motor shaft 42.

The outer ring 351 is fitted to the inner peripheral face of the recess hole 30e of the differential case 30 by clearance fit in such a manner that one-side end face is in contact with the step face 300e of the recess hole 30e of the differential case 30 and the other-side end face is exposed to the inside of the rotation force applying member 52 of the housing 2.

The rolling elements 352 are arranged so as to be interposed between the inner ring 350 and the outer ring 351, and rollably held by a cage (not illustrated).

The spring 48 is formed of, for example, a disc spring, and is arranged so as to be interposed between the bottom face of the cutout 20c of the first housing element 20 and the one-side end face of the outer ring 341 of the ball bearing 34. In addition, the spring 48 applies its spring force P to the ball bearings 34, 35, 46 (the ball bearing 46 will be described later) as an axial load, for example, in a direction indicated by an arrow in FIG. 2 (a direction of the spring force P). That is, the axial load for the ball bearings 34, 35, 46 is applied by a constant pressure preload. As the spring 48, for example, a wave spring may be used instead of a disc spring.

The pinion gear shaft 31 is arranged on an axis L that is perpendicular to the axis O within the accommodation space 30a of the differential case 30, and is restrained from rotating about the axis L and moving in a direction along the axis L by a pin 36.

The pair of the pinion gears 32 is rotatably supported by the pinion gear shaft 31, and is accommodated in the accommodation space 30a of the differential case 30.

The pair of the side gears 33 is rotatably accommodated in the accommodation space 30a of the differential case 30, and is spline-fitted to the rear axle shafts 106 (illustrated in FIG. 1) passed through the shaft insertion hole 30b. Thus, the pair of the side gears 33 is rotatably coupled to the rear axle shafts 106. In addition, the pair of the side gears 33 is arranged at such positions that their gear axes are perpendicular to the gear axes of the pair of the pinion gears 32 and the pair of the side gears 33 meshes with the pair of the pinion gears 32.

### (Configuration of Electric Motor 4)

The electric motor 4 includes a stator 40, a rotor 41 and the motor shaft 42 (motor shaft with eccentric portions), and is coupled to the rear differential 3 via the reduction-transmission mechanism 5 on the axis O, and the stator 40 is electrically connected to an ECU (Electronic Control Unit: not illustrated). The electric motor 4 generates motor torque that rotates the rotor 41 when the stator 40 receives a drive current from the ECU, and the rotor 41 is rotated together with the motor shaft 42.

The stator 40 is arranged at the outer peripheral side of the electric motor 4, and is fitted to the inward flange 21a of the second housing element 21 with a fitting bolt 43.

The rotor 41 is arranged at the inner peripheral side of the electric motor 4, and is fitted to the outer peripheral face of the motor shaft 42.

The motor shaft 42 is arranged on the axis O, and one-side end portion is rotatably supported by the inner peripheral face of the annular member 25 via a ball bearing 44 and a sleeve 45, and the other-side end portion is rotatably supported by the inner peripheral face of the third housing element 22 via the ball bearing 46. The motor shaft 42 rotates about the axis O. The motor shaft 42 is a cylindrical shaft member through which the rear axle shaft 106 (illustrated in FIG. 1) is passed.

An eccentric portion 42a, which is circular in planar view and has an axis O₁ that is offset from the axis O by an eccentric amount δ₁, and an eccentric portion 42b, which is circular in planar view and has an axis O₂ that is offset from the axis O by an eccentric amount δ₂ (δ₁ = δ₂ = δ) are formed integrally with the one-side axial end portion of the motor shaft 42. In addition, the annular step face 42c that restricts movement of the ball bearing 35 (the inner ring 350) toward the reduction-transmission mechanism 5 is formed at the one-side axial end portion of the motor shaft 42. Further, the one eccentric portion 42a and the other eccentric portion 42b are arranged at equal intervals (180°) in the circumferential direction around the axis O so as to be next to each other. That is, the one eccentric portion 42a and the other eccentric portion 42b are arranged such that the distance from the axis O₁ to the axis O and the distance from the axis O₂ to the axis O are equal to each other and the axis O is located on a line that connects the axis O₁ and the axis O₂ to each other. Further, the eccentric portion 42a and the eccentric portion 42b are arranged next to each other along the direction of the axis O.

A resolver 47 is arranged between the outer peripheral face of the other-side axial end portion of the motor shaft 42 and the inner peripheral face of the cylindrical portion 22b. In addition, an annular step face 42d that restricts movement of the ball bearing 46 (an inner ring 460) toward the reduction-transmission mechanism 5 is formed at the other-side axial end portion of the motor shaft 42. The resolver 47 is a rotation angle detector including a stator 470 and a rotor 471, and is accommodated in the third housing element 22. The stator 470 is fitted to the inner peripheral face of the cylindrical portion 22b, and the rotor 471 is fitted to the outer peripheral face of the motor shaft 42.

The ball bearing 46 includes inner and outer two bearing rings 460, 461 (the inner ring 460 and the outer ring 461) that are arranged next to each other respectively at inner and outer peripheral portions of the ball bearing 46, and rolling elements 462 that roll between the inner ring 460 and the outer ring 461, and is arranged so as to be interposed between the outer peripheral face of the other-side axial end portion of the motor shaft 42 and the step face 22c of the third housing element 22.

The inner ring 460 is fitted to the outer peripheral face of the other-side axial end portion of the motor shaft 42 by interference fit in such a manner that one-side end face is in contact with the step face 42d of the motor shaft 42 and the other-side end face is exposed to the inside of the shaft insertion hole 22a of the third housing element 22.

The outer ring 461 is fitted to the inner peripheral face of the shaft insertion hole 22a of the third housing element 22 by clearance fit in such a manner that one-side end face is exposed to the inside of the shaft insertion hole 22a of the third housing element 22 and the other-side end face is in contact with the step face 22c of the third housing element 22.

The rolling elements 462 are arranged so as to be interposed between the inner ring 460 and the outer ring 461, and rollably held by a cage (not illustrated).

### (Configuration of Reduction-transmission Mechanism 5)

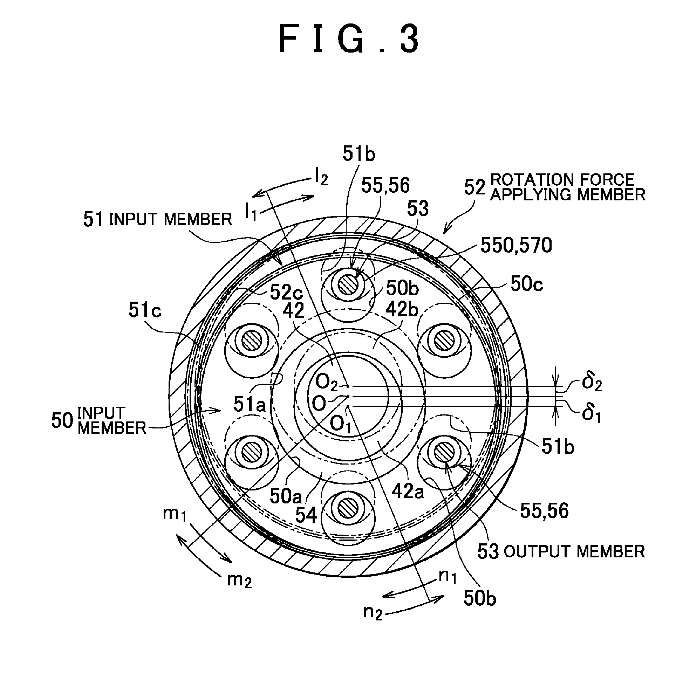

FIG. 3 illustrates the reduction-transmission mechanism. As illustrated in FIGs. 2 and 3, the reduction-transmission mechanism 5 includes a pair of input members 50, 51, the rotation force applying member 52, and output members 53, and is arranged so as to be interposed between the rear differential 3 and the electric motor 4. Further, as described above, the reduction-transmission mechanism 5 has a function of reducing the speed of the motor torque of the electric motor 4 and transmitting the driving force to the rear differential 3.

The one input member 50 is an external gear that has a center hole 50a of which the central axis coincides with the axis O₁. The one input member 50 is arranged so as to be closer to the rear differential 3 than the other input member 51, and is rotatably supported between the inner peripheral face of the center hole 50a and the eccentric portion 42a via a ball bearing 54. In addition, the one input member 50 makes circular motion (revolving motion about the axis O) in the directions of arrows m₁, m₂ with the eccentric amount δ, upon reception of motor torque from the electric motor 4. As a material of the one input member 50, the same material as the material of the differential case 30 is used. Further, as a material of the one input member 50, a material having substantially the same linear expansion coefficient as the linear expansion coefficient of the differential case 30 may be used.

In the one input member 50, multiple (six, in the present embodiment) pin insertion holes 50b are formed so as to be next to each other at equal intervals in the circumferential direction around the axis O₁. The hole diameter of each pin insertion hole 50b is set to a dimension that is larger than the dimension obtained by adding the outer diameter of a needle roller bearing 55 (described later) to the outer diameter of the output member 53. External teeth 50c having an involute tooth profile are formed on the outer peripheral face of the one input member 50, of which the central axis coincides with the axis O₁. The number Z₁ of the external teeth 50c is set to 195, for example.

The other input member 51 is an external gear that has a center hole 51a of which the central axis coincides with the axis O₂. The other input member 51 is arranged so as to be closer to the electric motor 4 than the one input member 50, and is rotatably supported between the inner peripheral face of the center hole 51a and the eccentric portion 42b via a ball bearing 56. In addition, the other input member 51 makes circular motion (revolving motion about the axis O) in the directions of arrows m₁, m₂ with the eccentric amount δ, upon reception of motor torque from the electric motor 4. As a material of the other input member 51, the same material as the material of the differential case 30 is used. Further, as a material of the other input member 51, a material having substantially the same linear expansion coefficient as the linear expansion coefficient of the differential case 30 may be used.

In the other input member 51, multiple (six, in the present embodiment) pin insertion holes 51b are formed so as to be next to each other at equal intervals in the circumferential direction around the axis O₂. The hole diameter of each pin insertion hole 51b is set to a dimension that is larger than the dimension obtained by adding the outer diameter of a needle roller bearing 57 (described later) to the outer diameter of the output member 53. External teeth 51c having an involute tooth profile are formed on the outer peripheral face of the other input member 51, of which the central axis coincides with the axis O₂. The number Z₂ (Z₂ = Z₁) of the external teeth 51c is set to 195, for example.

The rotation force applying member 52 is an internal gear of which the central axis coincides with the axis O, and is arranged so as to be interposed between the first housing element 20 and the second housing element 21. The rotation force applying member 52 is a cylindrical member with no bottom that is open toward both sides in the direction of the axis O, and constitutes part of the housing 2. Further, the rotation force applying member 52 meshes with the pair of the input members 50, 51, applies rotation force in the direction of the arrows n₁, n₂ to the one input member 50 that makes revolving motion upon reception of motor torque from the electric motor 4, and applies rotation force in the directions of the arrows l₁, l₂ to the other input member 51 that makes revolving motion upon reception of motor torque from the electric motor 4. As a material of the rotation force applying member 52, the material of the differential case 30, that is, the same material as the material of the input members 50, 51 is used.

Note that, description has been provided on the case where the material of the rotation force applying member 52 in the present embodiment is the same as the material of the input members 50, 51. The invention is not limited to this, and a material having substantially the same linear expansion coefficient as the linear expansion coefficient of the differential case 30 may be used, as long as the linear expansion coefficient of the material is closer to the linear expansion coefficient of the input members 50, 51 than the linear expansion coefficient of each of the first housing element 20 and the second housing element 21.

Here, a summary of the linear expansion coefficients of the materials of the components (the differential case 30, the first housing element 20, the second housing element 21, the input members 50, 51 and the rotation force applying member 52) that constitute the motor driving force transmission system 1 indicates the following relationship.

The absolute value of the difference between the linear expansion coefficient of the material of the input members 50, 51 and the linear expansion coefficient of the material of the rotation force applying member 52 is smaller than the absolute value of the difference between the linear expansion coefficient of the material of the input members 50, 51 and the linear expansion coefficient of the material of the first housing element 20, and smaller than absolute value of the difference between the linear expansion coefficient of the material of the input members 50, 51 and the linear expansion coefficient of the material of the second housing element 21.

Further, preferably, the absolute value of the difference between the linear expansion coefficient of the material of the input members 50, 51 and the linear expansion coefficient of the material of the rotation force applying member 52 is smaller than the absolute value of the difference between the linear expansion coefficient of the material of the rotation force applying member 52 and the linear expansion coefficient of the material of the first housing element 20, and smaller than the absolute value of the difference between the linear expansion coefficient of the material of the rotation force applying member 52 and the linear expansion coefficient of the material of the second housing element 21.

Further, preferably, the absolute value of the difference between the linear expansion coefficient of the material of the differential case 30 and the linear expansion coefficient of the material of the rotation force applying member 52 is smaller than the absolute value of the difference between the linear expansion coefficient of the material of the differential case 30 and the linear expansion coefficient of the material of the first housing element 20, smaller than the absolute value of the difference between the linear expansion coefficient of the material of the differential case 30 and the linear expansion coefficient of the material of the second housing element 21, smaller than the absolute value of the difference between the linear expansion coefficient of the material of the rotation force applying member 52 and the linear expansion coefficient of the material of the first housing element 20, and smaller than the absolute value of the difference between the linear expansion coefficient of the material of the rotation force applying member 52 and the linear expansion coefficient of the material of the second housing element 21.

Furthermore, preferably, the absolute value of the difference between the linear expansion coefficient of the material of the input members 50, 51 and the linear expansion coefficient of the material of the differential case 30 is smaller than the absolute value of the difference between the linear expansion coefficient of the material of the input members 50, 51 and the linear expansion coefficient of the material of the first housing element 20, smaller than the absolute value of the difference between the linear expansion coefficient of the material of the input members 50, 51 and the linear expansion coefficient of the material of the second housing element 21, smaller than the absolute value of the difference between the linear expansion coefficient of the material of the differential case 30 and the linear expansion coefficient of the material of the first housing element 20, and smaller than the absolute value of the difference between the linear expansion coefficient of the material of the differential case 30 and the linear expansion coefficient of the material of the second housing element 21.

Such a relationship in linear expansion coefficient of materials among the components is preferably established within at least part of a range from -40°C to 150°C that are temperatures in an environment in which the motor driving force transmission system 1 is used, and more preferably established within the entire range from -40°C to 150°C.

A first fitting portion 52a that is fitted to the outer peripheral face of the protruding portion 23 and a second fitting portion 52b that is fitted to the outer peripheral face of the protruding portion 27 are formed in the inner peripheral face of the rotation force applying member 52 so as to be located at a predetermined distance in the direction of the axis O. In addition, the inner peripheral face of the rotation force applying member 52 has internal teeth 52c having an involute tooth profile and located between the first fitting portion 52a and the second fitting portion 52b, and the internal teeth 52c having an involute tooth profile are in mesh with the external teeth 50c of the one input member 50 and the external teeth 51c of the other input member 51. The number Z₃ of the internal teeth 52c is set to 208, for example. The reduction gear ratio α of the reduction-transmission mechanism 5 is calculated according to α =Z₂ / (Z₃ - Z₂).

The output members 53 are multiple (six, in the present embodiment) bolts each having a threaded portion 53a at one-side end portion and a head portion 53b at the other-side end portion, and the threaded portions 53a are passed through the pin insertion holes 50b of the one input member 50 and the pin insertion holes 51b of the other input member 51 and then fitted in the pin fitting holes 300c of the differential case 30. In addition, the output members 53 are arranged so as to be passed through an annular spacer 58 that is interposed between each head portion 53b and the other input member 51, and are arranged at equal intervals in the circumferential direction around the axis O. Thus, the output members 53 receive rotation force, applied by the rotation force applying member 52, from the pair of the input members 50, 51, and output the rotation force as the torque of the differential case 30. As a material of the output members 53, the same material as the material of the differential case 30 is used. Further, as a material of the output members 53, the material that has substantially the same linear expansion coefficient as the linear expansion coefficient of the differential case 30 may be used.

The needle roller bearing 55 for reducing contact resistance with the inner peripheral face of the pin insertion hole 50b of the one input member 50 and the needle roller bearing 57 for reducing contact resistance with the inner peripheral face of the pin insertion hole 51b of the other input member 51 are fitted to the outer peripheral face of each output member 53 at a portion between the threaded portion 53a and the head portion 53b.

In the thus-configured motor driving force transmission system, as illustrated in FIG. 2, the spring force P of the spring 48 interposed between the bottom face of the cutout 20c of the first housing element 20 and one-side end face of the outer ring 341 of the ball bearing 34 is applied to the ball bearings 34, 35, 46 as an axial load (constant pressure preload).

In order to apply the above-described constant pressure preload, to the ball bearings 34, 35, 46, the ball bearing 46 is fitted between the motor shaft 42 and the third housing element 22, the ball bearing 35 is fitted between the differential case 30 and the motor shaft 42, and the ball bearing 34 is fitted between the first housing element 20 and the differential case 30, and the outer ring 461 is brought into contact with the step face 22c of the third housing element 22, the outer ring 351 is brought into contact with the step face 300e of the recess hole 30e of the differential case 30, and the outer ring 341 is brought into contact with the bottom face of the cutout 20c of the first housing element 20 via the spring 48. Then, while these states are maintained, the length in the axial direction between the bottom face of the cutout 20c of the first housing element 20 and the step face 22c of the third housing element 22 is adjusted by fastening the first housing element 20 and the second housing element 21 to the third housing element 22 with the use of a fastening bolt 84, and thus the spring 48 is compressed in the axial direction. Thus, the axial clearance of each of the ball bearings 34, 35, 46 is eliminated, or the axial clearance of each of the ball bearings 34, 35, 46 becomes a negative clearance.

In this case, the spring force P of the spring 48 is applied to the outer ring 341 of the ball bearing 34, and accordingly the spring force P is transmitted to the inner ring 340 via the rolling elements 342, and is applied from the inner ring 340 to the differential case 30 via the step face 30d.

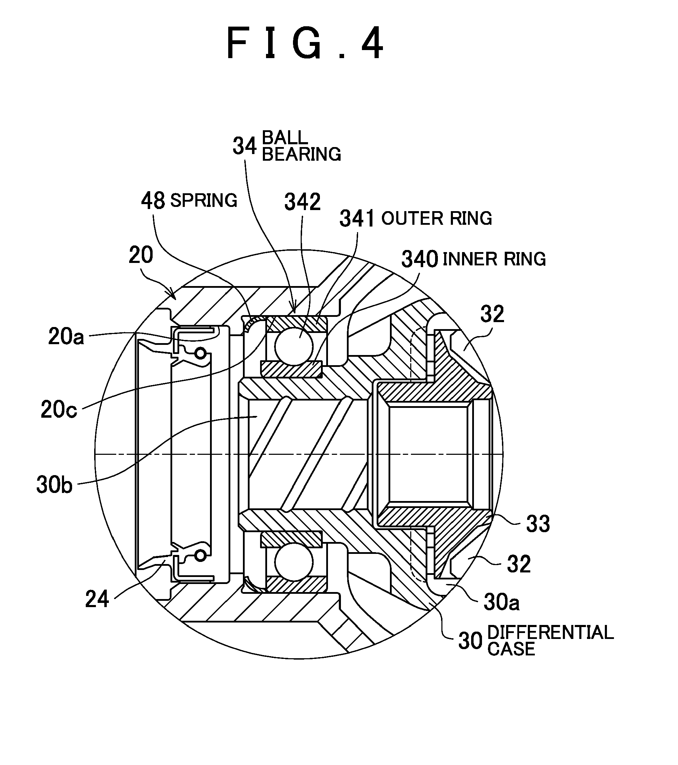

Meanwhile, the inner ring 340 of the ball bearing 34 receives a reaction force P' against the spring force P (|P| = |P'|) from the differential case 30 via the step face 30d, and the inner ring 340 and the outer ring 341 move relative to each other along the axis of the ball bearing 34 in such a direction that the axial clearance of the ball bearing 34 is reduced, as illustrated in FIG. 4. In the present embodiment, the outer ring 341 moves relative to the inner ring 340 toward the reduction-transmission mechanism 5 along the axis of the ball bearing 34.

When the differential case 30 receives the spring force P from the inner ring 340 of the ball bearing 34 via the step face 30d, the spring force P is applied to the outer ring 351 of the ball bearing 35. Accordingly, the spring force P is transmitted from the outer ring 351 to the inner ring 350 via the rolling elements 352, and then applied from the inner ring 350 to the motor shaft 42 via the step face 42c.

Meanwhile, the inner ring 350 of the ball bearing 35 receives the reaction force P' against the spring force P from the motor shaft 42 via the step face 42c, and the inner ring 350 and the outer ring 351 move relative to each other along the axis of the ball bearing 35 in such a direction that the axial clearance of the ball bearing 35 is reduced. In the present embodiment, the outer ring 351 moves relative to the inner ring 350 toward the reduction-transmission mechanism 5 along the axis of the ball bearing 35.

When the motor shaft 42 receives the spring force P from the inner ring 350 of the ball bearing 35 via the step face 42c, the spring force P is applied to the inner ring 460 of the ball bearing 46 via the step face 42d. Accordingly, the spring force P is transmitted to the outer ring 461 via the rolling elements 462, and is then applied from the outer ring 461 to the third housing element 22 via the step face 22c.

Meanwhile, the outer ring 461 of the ball bearing 46 receives the reaction force P' against the spring force P from the third housing element 22 via the step face 22c, and the inner ring 460 and the outer ring 461 move relative to each other along the axis of the ball bearing 46 in such a direction that the axial clearance of the ball bearing 46 is reduced. In the present embodiment, the inner ring 460 moves together with the motor shaft 42 relative to the outer ring 461 toward the side opposite from the electric motor 4-side along the axis of the ball bearing 46.

Therefore, in the present embodiment, when the axial length of the housing 2 is adjusted, the inner ring 340 and the outer ring 341 move relative to each other in such a direction that the axial clearance of the ball bearing 34 is reduced, the inner ring 350 and the outer ring 351 move relative to each other in such a direction that the axial clearance of the ball bearing 35 is reduced, and the inner ring 460 and the outer ring 461 move relative to each other in such a direction that the axial clearance of the ball bearing 46 is reduced. Therefore, it is possible to reduce the axial clearances of the ball bearings 34, 35, 46.

Further, in the present embodiment, because the motor shaft 42 is a motor shaft with eccentric portions, which has the eccentric portions 42a, 42b, a radial clearance and an axial clearance are not present between the motor shaft of the electric motor and the rotary shaft of the reduction-transmission mechanism, unlike in a conventional case.

### (Operation of Motor Driving Force Transmission System 1)

Next, the operation of the motor driving force transmission system indicated in the present embodiment will be described with the use of FIG. 1 to FIG. 3.

In FIG. 2, when electric power is supplied to the electric motor 4 of the motor driving force transmission system 1 to drive the electric motor 4, the motor torque of the electric motor 4 is applied to the reduction-transmission mechanism via the motor shaft 42, and the reduction-transmission mechanism 5 is actuated.

Therefore, in the reduction-transmission mechanism 5, the input members 50, 51 make circular motion with the eccentric amount δ, for example, in the direction of the arrow m₁ illustrated in FIG. 3.

Accordingly, the input member 50 rotates about the axis O₁ (the direction of the arrow n₁ illustrated in FIG. 3) while the external teeth 50c are meshed with the internal teeth 52c of the rotation force applying member 52, and the input member 51 rotates about the axis O₂ (the direction of the arrow l₁ illustrated in FIG. 3) while the external teeth 51c are meshed with the internal teeth 52c of the rotation force applying member 52. In this case, due to the rotation of the input members 50, 51, the inner peripheral faces of the pin insertion holes 50b contact races 550 of the needle roller bearings 55, and the inner peripheral faces of the pin insertion holes 51b contact races 570 of the needle roller bearings 57, as illustrated in FIG. 2.

Therefore, the revolving motions of the input members 50, 51 are not transmitted to the output members 53 and only the rotating motions of the input members 50, 51 are transmitted to the output members 53. Rotation force resulting from the rotating motions is output from the output members 53 to the differential case 30 as the torque thereof.

Thus, the rear differential 3 is actuated, and driving force based on the motor torque of the electric motor 4 is distributed to the rear axle shafts 106 illustrated in FIG. 1, and transmitted to the right and left rear wheels 105.

Here, in the motor driving force transmission system 1, when a temperature increase due to the operation thereof occurs, each component is thermally expanded. For example, the housing 2 (the first housing element 20 and the second housing element 21), the reduction-transmission mechanism 5 and the differential case 30 are assumed to be thermally expanded.

In this case, the rotation force applying member 52 is a member different from the first housing element 20, the second housing element 21 and the third housing element 22. In addition, the linear expansion coefficient of the differential case 30 and the linear expansion coefficient of each of the components (the input members 50, 51, the rotation force applying member 52, the output members 53) of the reduction-transmission mechanism 5 are set to the same linear expansion coefficient. Therefore, the differential case 30 and the reduction-transmission mechanism 5 are thermally expanded at the same thermal expansion amount due to a temperature increase along with the operation of the motor driving force transmission system 1. The thermal expansion amount is smaller than the thermal expansion amount of the first housing element 20, the second housing element 21 and the third housing element 22. Thus, the situation does not occur where the rotation force applying member 52 is restrained by the first housing element 20 and the second housing element 21 such that thermal expansion is not possible and the output members 53 are restrained by the differential case 30 such that thermal expansion is not possible.

On the other hand, when the temperature of each of the differential case 30 and the reduction-transmission mechanism 5 is decreased, the differential case 30 and the reduction-transmission mechanism 5 are thermally contracted at the same thermal contraction amount that is smaller than the thermal contraction amount of the first housing element 20, the second housing element 21, and the third housing element 22, and the situation does not occur where the rotation force applying member 52 is restrained by the first housing element 20 and the second housing element 21 such that thermal contraction is not possible and the output members 53 are restrained by the differential case 30 such that thermal contraction is not possible.

Note that, in the above-described embodiment, the description has been provided on the case where the motor driving force transmission system 1 is actuated by causing the input members 50, 51 to make circular motion in the direction of the arrow m₁. However, the motor driving force transmission system 1 may be actuated in the same manner as that in the above-described embodiment even when the input members 50, 51 are caused to make circular motion in the direction of the arrow m₂. In this case, the rotating motion of the input member 50 is made in the direction of the arrow n₂, and the rotating motion of the input member 51 is made in the direction of the arrow l₂.

### (Effects of First Embodiment)

According to the first embodiment described above, the following effects are obtained.
(1) A radial clearance is not present between the motor shaft of the electric motor and the rotary shaft of the reduction-transmission mechanism, unlike the conventional case, and the axial clearance of each of the ball bearings 34, 35, 46 can be reduced. Therefore, it is possible to suppress generation of NV.
(2) Thermal expansion and thermal contraction of the rotation force applying member 52 and the output members 53 are not restrained by a temperature change due to the operation of the motor driving force transmission system 1, and it is possible to suppress occurrence of a dimensional change between the input members 50, 51 and the rotation force applying member 52 and a dimensional change between the output members 53 and the input members 50, 51.
(3) Because the rotation force applying member 52 is a cylindrical member that constitutes part of the housing 2, the outer diameter of the rotation force applying member 52 can be set to a larger dimension as compared with the case where the rotation force applying member 52 is accommodated in the housing 2, and thus the mechanical strength of the rotation force applying member 52 can be increased. Also, because the rotation force applying member 52 constitutes part of the housing 2, it is possible to reduce the radial dimension of the system as a whole, thereby reducing the size of the system.
(4) Centering can be performed by fitting the first fitting portion 52a of the rotation force applying member 52 to the outer peripheral face of the protruding portion 23 and fitting the second fitting portion 52b to the outer peripheral face of the protruding portion 27. Thus, it is possible to easily perform manufacturing of the rotation force applying member 52.

### [SECOND EMBODIMENT]

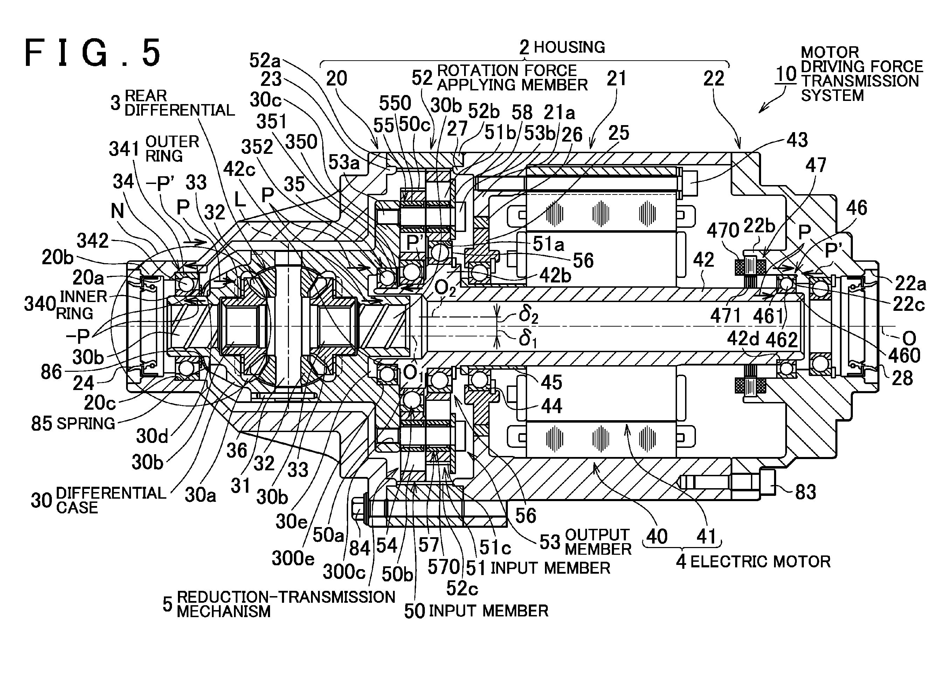

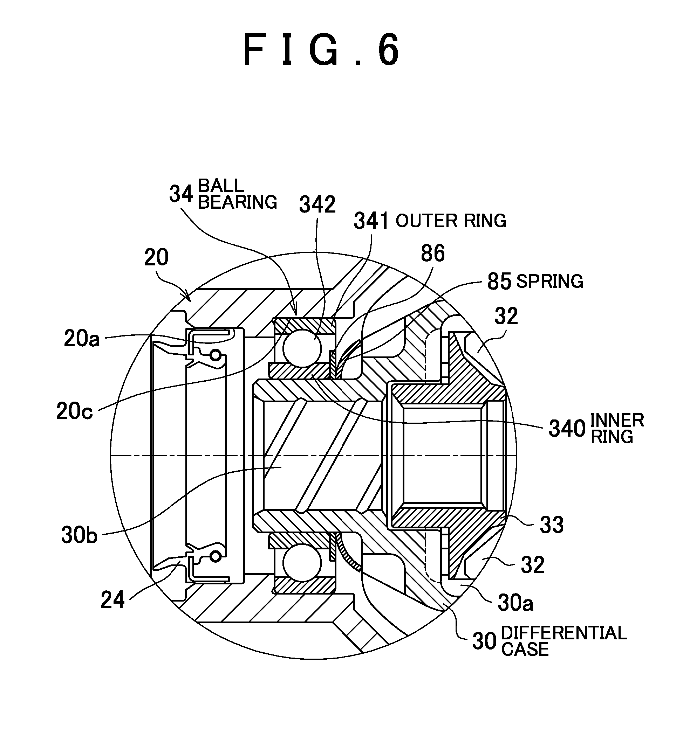

Next, a motor driving force transmission system according to a second embodiment of the invention will be described with the use of FIG. 5 and FIG. 6. FIG. 5 illustrates the entirety of the motor driving force transmission system. FIG. 6 illustrates main portions of the motor driving force transmission system. In FIG. 5 and FIG. 6, the same reference symbols will be assigned to the members that have the same or substantially the same functions as those in FIG. 2 and FIG. 4, and detailed description thereof will be omitted.

As illustrated in FIG. 5 and FIG. 6, a motor driving force transmission system 10 according to the second embodiment of the invention is characterized in that the spring forces P, -P that become the axial loads that are applied to the ball bearings 34, 35, 46 are applied to the differential case 30 and the inner ring 340 of the ball bearing 34 by a spring 85.

Therefore, the spring 85 is interposed between the reduction-transmission mechanism 5-side end face of the inner ring 340 and the step face 30d of the axial center portion of the differential case 30, and is arranged around the outer periphery of the one-side axial end portion of the differential case 30. As the spring 85, a disc spring that has spring forces that become the axial loads that are applied to the ball bearings 34, 35, 46 is used. Note that, as the spring 85, a wave spring may be used instead of a disc spring.

In addition, the spring 85 is provided with an annular spacer 86 arranged on the side of the inner ring 340 of the ball bearing 34. The spacer 86 is arranged around the outer periphery of the one-side axial end portion of the differential case 30.

In the thus-configured motor driving force transmission system, as illustrated in FIG. 5, the spring forces P, -P of the spring 85 interposed between the spacer 86 arranged on the side of the inner ring 340 of the ball bearing 34 and the step face 30d of the differential case 30 are applied to the ball bearings 34, 35, 46 as axial loads (constant pressure preload).

In order to apply the above-described constant pressure preloads, to the ball bearings 34, 35, 46, the ball bearing 46 is fitted between the motor shaft 42 and the third housing element 22, the ball bearing 35 is fitted between the differential case 30 and the motor shaft 42, and the ball bearing 34 is fitted between the first housing element 20 and the differential case 30, and the outer ring 461 is brought into contact with the step face 22c of the third housing element 22, the outer ring 351 is brought into contact with the step face 300e of the recess hole 30e of the differential case 30, and the outer ring 341 is brought into contact with the bottom face of the cutout 20c of the first housing element 20, and the spring 85 is interposed between the inner ring 340 and the step face 30d of the differential case 30. Then, while these states are maintained, the length in the axial direction between the bottom face of the cutout 20c of the first housing element 20 and the step face 22c of the third housing element 22 is adjusted by fastening the first housing element 20 and the second housing element 21 to the third housing element 22 with the use of the fastening bolt 84, and thus the spring 85 is compressed in the axial direction. Thus, the axial clearance of each of the ball bearings 34, 35, 46 is eliminated, or the axial clearance of each of the ball bearings 34, 35, 46 becomes a negative clearance.

In this case, the spring force -P of the spring 85 is applied to the inner ring 340 of the ball bearing 34, and accordingly the spring force -P is transmitted to the outer ring 341 via the rolling elements 342, and is applied from the outer ring 341 to the first housing element 20 via the bottom face of the cutout 20c. Also, the spring force P of the spring 85 is applied to the axial center portion of the differential case 30 (step face 30d).

Meanwhile, the outer ring 341 of the ball bearing 34 receives a reaction force -P' against the spring force -P (|-P| = |-P'|) from the first housing element 20 via the bottom face of the cutout 20c, and the inner ring 340 and the outer ring 341 move relative to each other along the axis of the ball bearing 34 in such a direction that the axial clearance of the ball bearing 34 is reduced, as illustrated in FIG. 6. In the present embodiment, the inner ring 340 moves relative to the outer ring 341 toward the side opposite from the reduction-transmission mechanism 5-side along the axis of the ball bearing 34.

When the differential case 30 receives the spring force P from the inner ring 340 of the ball bearing 34 via the step face 30d, the spring force P is applied to the outer ring 351 of the ball bearing 35. Accordingly, the spring force P is transmitted from the outer ring 351 to the inner ring 350 via the rolling elements 352, and then applied from the inner ring 350 to the motor shaft 42 via the step face 42c.

Meanwhile, the inner ring 350 of the ball bearing 35 receives the reaction force P'(|P| = |P'|) against the spring force P from the motor shaft 42 via the step face 42c, and the inner ring 350 and the outer ring 351 move relative to each other along the axis of the ball bearing 35 in such a direction that the axial clearance of the ball bearing 35 is reduced. In the present embodiment, the outer ring 351 moves relative to the inner ring 350 toward the reduction-transmission mechanism 5 along the axis of the ball bearing 35.

When the motor shaft 42 receives the spring force P from the inner ring 350 of the ball bearing 35 via the step face 42c, the spring force P is applied to the inner ring 460 of the ball bearing 46 via the step face 42d. Accordingly, the spring force P is transmitted to the outer ring 461 via the rolling elements 462, and is then applied from the outer ring 461 to the third housing element 22 via the step face 22c.

Meanwhile, the outer ring 461 of the ball bearing 46 receives the reaction force P' against the spring force P from the third housing element 22 via the step face 22c, and the inner ring 460 and the outer ring 461 move relative to each other along the axis of the ball bearing 46 in such a direction that the axial clearance of the ball bearing 46 is reduced. In the present embodiment, the inner ring 460 moves together with the motor shaft 42 relative to the outer ring 461 toward the side opposite from the electric motor 4-side along the axis of the ball bearing 46.

Therefore, in the present embodiment, when the axial length of the housing 2 is adjusted, the inner ring 340 and the outer ring 341 move relative to each other in such a direction that the axial clearance of the ball bearing 34 is reduced, the inner ring 350 and the outer ring 351 move relative to each other in such a direction that the axial clearance of the ball bearing 35 is reduced, and the inner ring 460 and the outer ring 461 move relative to each other in such a direction that the axial clearance of the ball bearing 46 is reduced. Therefore, it is possible to reduce the axial clearance of each of the ball bearings 34, 35, 46.

Further, in the present embodiment, because the motor shaft 42 is a motor shaft with eccentric portions, which has the eccentric portions 42a, 42b, a radial clearance and an axial clearance are not present between the motor shaft of the electric motor and the rotary shaft of the reduction-transmission mechanism, unlike in a conventional case.

### [Effects of Second Embodiment]

According to the second embodiment as described above, the same effects as those in the first embodiment can be obtained.

### [THIRD EMBODIMENT]

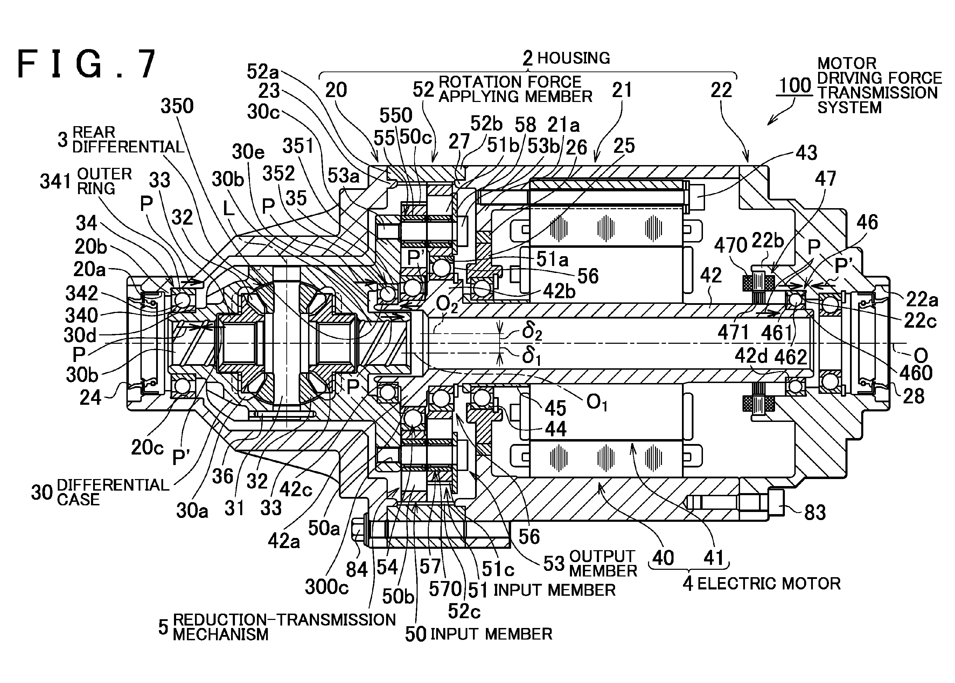

Next, a motor driving force transmission system according to a third embodiment of the invention will be described with the use of FIG. 7. FIG. 7 illustrates the entirety of the motor driving force transmission system. In FIG. 7, the same reference symbols will be assigned to the members that have the same or substantially the same functions as those in FIG. 2, and detailed description thereof will be omitted.

As illustrated in FIG. 7, a motor driving force transmission system 100 according to the third embodiment of the invention is characterized in that an axial load for the ball bearings 34, 35, 46 is applied by a positioning preload.

The inner ring 340 of the ball bearing 34 is fitted to the outer peripheral face of the one-side axial end portion of the differential case 30 by interference fit in such a manner that the one-side end face is exposed to the inside of the shaft insertion hole 20a of the first housing element 20 and the other-side end face is in contact with the step face 30d of the differential case 30.

The outer ring 341 of the ball bearing 34 is fitted to the inner peripheral face of the shaft insertion hole 20a by clearance fit in such a manner that the one-side end face is in contact with the bottom face of the cutout 20c of the first housing element 20 and the other-side end face is exposed to the inside of the shaft insertion hole 20a of the first housing element 20.

The rolling elements 342 are arranged so as to be interposed between the inner ring 340 and the outer ring 341, and rollably held by a cage (not illustrated).

The inner ring 350 of the ball bearing 35 is fitted to the outer peripheral face of the one-side axial end portion of the motor shaft 42 by interference fit in such a manner that one-side end face is exposed to the inside of the recess hole 30e of the differential case 30, and the other-side end face is in contact with the step face 42c of the motor shaft 42.

The outer ring 351 of the ball bearing 35 is fitted to the inner peripheral face of the recess hole 30e of the differential case 30 by clearance fit in such a manner that the one-side end face is in contact with the step face 300e of the recess hole 30e of the differential case 30 and the other-side end face is exposed to the inside of the rotation force applying member 52 of the housing 2.

The rolling elements 352 are arranged so as to be interposed between the inner ring 350 and the outer ring 351, and rollably held by a cage (not illustrated).

The inner ring 460 of the ball bearing 46 is fitted to the outer peripheral face of the other-side axial end portion of the motor shaft 42 by interference fit in such a manner that the one-side end face is in contact with the step face 42d of the motor shaft 42 and the other-side end face is exposed to the inside of the shaft insertion hole 22a of the third housing element 22.

The outer ring 461 of the ball bearing 46 is fitted to the inner peripheral face of the shaft insertion hole 22a of the third housing element 22 by clearance fit in such a manner that the one-side end face is exposed to the inside of the shaft insertion hole 22a of the third housing element 22 and the other-side end face is in contact with the step face 22c of the third housing element 22.

The rolling elements 462 are arranged so as to be interposed between the inner ring 460 and the outer ring 461, and rollably held by a cage (not illustrated).

In the thus-configured motor driving force transmission system 100, as illustrated in FIG. 7, the fastening force P generated by fastening the first housing element 20 and the second housing element 21 to the third housing element 22 with the use of the fastening bolt 84 is applied to the ball bearings 34, 35, 46 as an axial load (positioning preload).

In order to apply the above-described positioning preload, to the ball bearings 34, 35, 46, the ball bearing 46 is fitted between the motor shaft 42 and the third housing element 22, the ball bearing 35 is fitted between the differential case 30 and the motor shaft 42, and the ball bearing 34 is fitted between the first housing element 20 and the differential case 30, and the outer ring 461 is brought into contact with the step face 22c of the third housing element 22, the outer ring 351 is brought into contact with the step face 300e of the recess hole 30e of the differential case 30, and the outer ring 341 is brought into contact with the bottom face of the cutout 20c of the first housing element 20. Then, while these states are maintained, the length in the axial direction between the bottom face of the cutout 20c of the first housing element 20 and the step face 22c of the third housing element 22 is adjusted by fastening the first housing element 20 and the second housing element 21 to the third housing element 22 with the use of the fastening bolt 84. Thus, the axial clearance of each of the ball bearings 34, 35, 46 is eliminated, or the axial clearance of each of the ball bearings 34, 35, 46 becomes a negative clearance.

In this case, the fastening force P generated during fastening by the fastening bolt 84 is applied to the outer ring 341 of the ball bearing 34 from the bottom face of the cutout 20c of the first housing element 20, and accordingly the fastening force P is transmitted to the inner ring 340 via the rolling elements 342, and is applied from the inner ring 340 to the differential case 30 via the step face 30d.

Meanwhile, the inner ring 340 of the ball bearing 34 receives a reaction force P' against the fastening force P (|P| = |P'|) from the differential case 30 via the step face 30d, and the inner ring 340 and the outer ring 341 move relative to each other along the axis of the ball bearing in such a direction that the axial clearance of the ball bearing 34 is reduced. In the present embodiment, the outer ring 341 moves relative to the inner ring 340 toward the reduction-transmission mechanism 5 along the axis of the ball bearing 34.

When the differential case 30 receives the fastening force P from the inner ring 340 of the ball bearing 34 via the step face 30d, the fastening force P is applied to the outer ring 351 of the ball bearing 35. Accordingly, the fastening force P is transmitted from the outer ring 351 to the inner ring 350 via the rolling elements 352, and then applied from the inner ring 350 to the motor shaft 42 via the step face 42c.

Meanwhile, the inner ring 350 of the ball bearing 35 receives the reaction force P' against the fastening force P from the motor shaft 42 via the step face 42c, and the inner ring 350 and the outer ring 351 move relative to each other along the axis of the ball bearing 35 in such a direction that the axial clearance of the ball bearing 35 is reduced. In the present embodiment, the outer ring 351 moves relative to the inner ring 350 toward the reduction-transmission mechanism 5 along the axis of the ball bearing 35.

When the motor shaft 42 receives the fastening force P from the inner ring 350 of the ball bearing 35 via the step face 42c, the fastening force P is applied to the inner ring 460 of the ball bearing 46 via the step face 42d. Accordingly, the fastening force P is transmitted to the outer ring 461 via the rolling elements 462, and is then applied from the outer ring 461 to the third housing element 22 via the step face 22c.

Meanwhile, the outer ring 461 of the ball bearing 46 receives the reaction force P' against the fastening force P from the third housing element 22 via the step face 22c, and the inner ring 460 and the outer ring 461 move relative to each other along the axis of the ball bearing 46 in such a direction that the axial clearance of the ball bearing 46 is reduced. In the present embodiment, the inner ring 460 moves together with the motor shaft 42 relative to the outer ring 461 toward the side opposite from the electric motor 4-side along the axis of the ball bearing 46.

Therefore, in the present embodiment, when the axial length of the housing 2 is adjusted, the inner ring 340 and the outer ring 341 can reduce the axial clearance of the ball bearing 34, the inner ring 350 and the outer ring 351 can reduce the axial clearance of the ball bearing 35, and the inner ring 460 and the outer ring 461 can reduce the axial clearance of the ball bearing 46.

Further, in the present embodiment, because the motor shaft 42 is a motor shaft with eccentric portions, which has the eccentric portions 42a, 42b, a radial clearance and an axial clearance are not present between the motor shaft of the electric motor and the rotary shaft of the reduction-transmission mechanism, unlike in a conventional case.

### [Effects of Third Embodiment]

According to the third embodiment as described above, the same effects as those in the first embodiment can be obtained.

### [FOURTH EMBODIMENT]

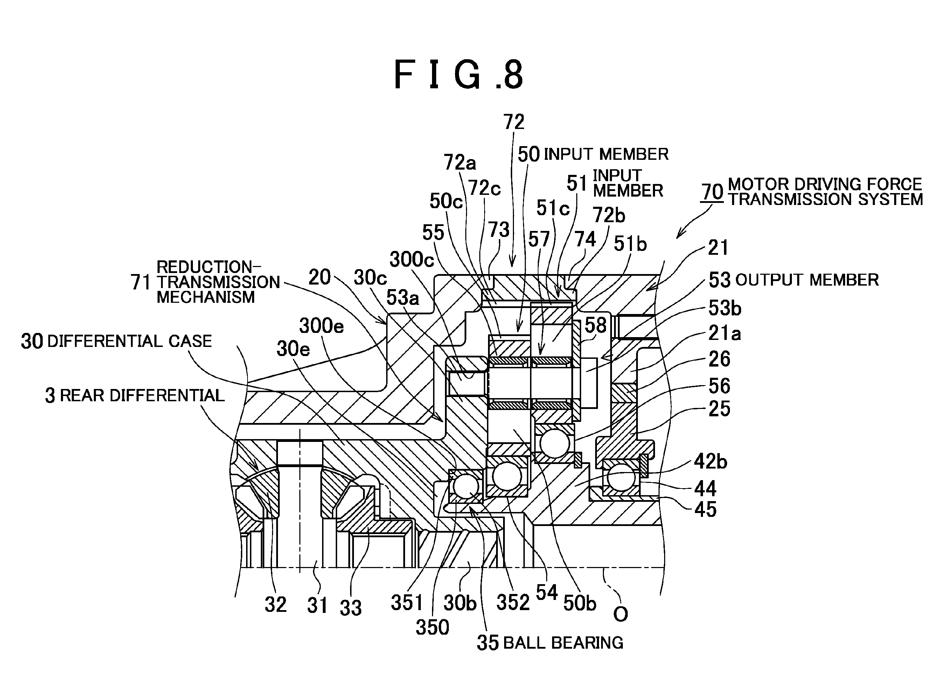

Next, a motor driving force transmission system according to a fourth embodiment of the invention will be described with the use of FIG. 8. FIG. 8 illustrates the fitting state of the rotation force applying member of the reduction-transmission mechanism. In FIG. 8, the same reference symbols will be assigned to the members that have the same or substantially the same functions as those in FIG. 2, and detailed description thereof will be omitted.

As illustrated in FIG. 8, a motor driving force transmission system 70 according to the fourth embodiment of the invention is characterized in that a rotation force applying member 72 of a reduction-transmission mechanism 71 has a first fitting portion 72a that is fitted to the inner peripheral face of the first housing element 20, and a second fitting portion 72b that is fitted to the inner peripheral face of the second housing element 21.

Therefore, an annular protruding portion 73 that protrudes toward the second housing element 21 is formed integrally with the opening end face of the first housing element 20. The inner peripheral face of the protruding portion 73 is formed of a circumferential surface that has an inner diameter that is larger than the maximum inner diameter of the first housing element 20 and of which the central axis coincides with the axis O.

An annular protruding portion 74 that protrudes toward the first housing element 20 is formed integrally with the first housing element 20-side opening end face of the second housing element 21. The inner peripheral face of the protruding portion 74 is formed of a circumferential surface that has an inner diameter that is larger than the maximum inner diameter of the second housing element 21 and that is substantially equal to the inner diameter of the protruding portion 73, and of which the central axis coincides with the axis O.

Internal teeth 72c are formed in the inner peripheral face of the rotation force applying member 72, between the first fitting portion 72a and the second fitting portion 72b, and the internal teeth 72c mesh with the external teeth 50c of the input member 50 and the external teeth 51c of the input member 51.

In the thus-configured motor driving force transmission system 70, like the motor driving force transmission system 1 indicated in the first embodiment, if a temperature increase due to an operation occurs, the components (the input members 50, 51, the rotation force applying member 72, and the output members 53, differential case 30) are thermally expanded at the same thermal expansion amount that is smaller than the thermal expansion amount of the first housing element 20, the second housing element 21 and the third housing element 22 (illustrated in FIG. 2), and the situation does not occur where the rotation force applying member 52 is restrained by the first housing element 20 and the second housing element 21 such that thermal expansion is not possible and the output members 53 are restrained by the differential case 30 such that thermal expansion is not possible.

On the other hand, when the temperature of each of the differential case 30 and the reduction-transmission mechanism 71 is decreased, the components are thermally contracted at the same thermal contraction amount that is smaller than the thermal contraction amount of the first housing element 20, the second housing element 21 and the third housing element 22, and the situation does not occur where the rotation force applying member 52 is restrained by the first housing element 20 and the second housing element 21 such that thermal contraction is not possible and the output members 53 are restrained by the differential case 30 such that thermal contraction is not possible.

### [Effects of Fourth Embodiment]

According to the fourth embodiment as described above, the same effects as those in the first embodiment can be obtained.

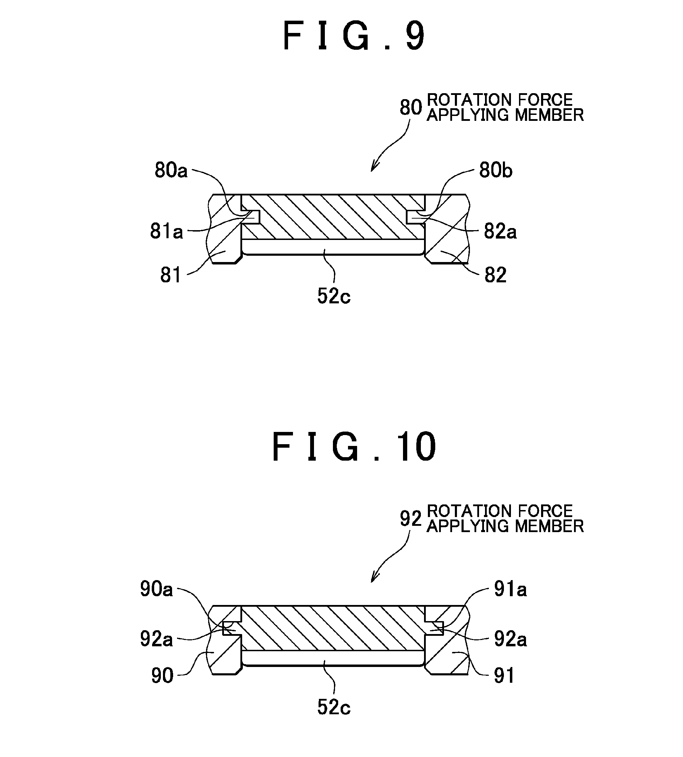

The motor driving force transmission system according to the invention has been described on the basis of the above-described embodiments. However, the invention is not limited to the above-described embodiments, and may be implemented in various modes within the scope of the invention. For example, the following modifications may be made.
(1) In the above-described embodiments (the first embodiment and the fourth embodiment), description has been provided on the case where the spring 48 is arranged so as to be interposed between the end face of the outer ring 341 of the ball bearing 34, on the opposite side from the reduction-transmission mechanism 5-side, and the bottom face of the cutout 20c of the first housing element 20. However, the invention is not limited to this. A spring having a spring force that serves as an axial load for the ball bearing 30 may be arranged so as to be interposed between the end face of the outer ring 351 of the ball bearing 35, on the opposite side from the reduction-transmission mechanism 5-side, and the step face 300e of the recess hole 30e of the differential case 30, and a spring having a spring force that serves as an axial load for the ball bearing 46 may be arranged so as to be interposed between the end face of the outer ring 461 of the ball bearing 46 (end face of the outer ring 461, on the opposite side from the electric motor 4-side end face) and the step face 22c of the third housing element 22.
(2) In the above-described embodiment (the second embodiment), description has been provided on the case where the spring 85 is arranged so as to be interposed between the end face of the inner ring 340 of the ball bearing 34 (the reduction-transmission mechanism 5-side end face of the inner ring 340) and the step face 30d of the differential case 30. However, the invention is not limited to this. A spring having a spring force that serves as an axial load for the ball bearing 35 may be arranged so as to be interposed between the end face of the inner ring 350 of the ball bearing 35 (the reduction-transmission mechanism 5-side end face of the inner ring 350) and the step face 42c of the motor shaft 42, and a spring having a spring force that serves as an axial load for the ball bearing 46 may be arranged so as to be interposed between the end face of the inner ring 460 of the ball bearing 46 (the electric motor 4-side end face of the inner ring 460) and the step face 42d of the motor shaft 42.
(3) Description has been provided on the first embodiment in which the rotation force applying member 52 has the first fitting portion 52a that is fitted to the outer peripheral face of the first housing element 20 (the outer peripheral face of the protruding portion 23) and the second fitting portion 52b that is fitted to the outer peripheral face of the second housing element 21 (the outer peripheral face of the protruding portion 27), and the second embodiment in which the rotation force applying member 72 has the first fitting portion 72a that is fitted to the inner peripheral face of the first housing element 20 (the inner peripheral face of the protruding portion 73) and the second fitting portion 72b that is fitted to the inner peripheral face of the second housing element 21 (the inner peripheral face of the protruding portion 74). The invention is not limited to this, and, for example, fitting structures as illustrated in FIG. 9 and FIG. 10 may be employed.
   As illustrated in FIG. 9 as a fifth embodiment, annular recess grooves 80a, 80b are formed in respective opening end faces of a rotation force applying member 80. A first housing element 81 has an annular protruding portion 81a that protrudes from a second housing element 82-side opening end face and that is fitted into the recess groove 80a. A second housing element 82 has an annular protruding portion 82a that protrudes from a first housing element 81-side opening end face and that is fitted into the recess groove 80b.
   As illustrated in FIG. 10 as a sixth embodiment, a first housing element 90 has an annular recess groove 90a formed in a second housing element 91-side opening end face, and a second housing element 91 has an annular recess groove 91a formed in a first housing element 90-side opening end face. A protruding portion 92a that is fitted into the recess groove 90a and a protruding portion 92b that is fitted into the recess groove 91a are formed in a rotation force applying member 92.
(4) In the above-described embodiments, description has been provided on the case where the housing 2 (except the rotation force applying member 52), the input members 50, 51 and the rotation force applying member 52 are made of materials that have linear expansion coefficients that differ from each other. The invention is not limited to this. The housing, the input members and the rotation force applying member may be made of materials having the same linear expansion coefficient.
(5) In the above-described embodiments, description has been provided on the case where the one eccentric portion 42a and the other eccentric portion 42b are formed on the motor rotary shaft 42 such that the distance from the axis O₁ and the axis O and the distance from the axis O₂ to the axis O are equal to each other and the axis O is located on the line that connects the axis O₁ and the axis O₂ to each other, and the pair of the input members 50, 51 is arranged at equal intervals (180°) in the circumferential direction around the axis O. The invention is not limited to this. The number of input members may be changed as needed.
   That is, when the number of the input members is n (n ≥ 3), the axis of the first eccentric portion, the axis of the second eccentric portion, ..., and the axis of the nth eccentric portion are sequentially arranged in one direction around the axis of the motor shaft, on an imaginary plane perpendicular to the axis of the electric motor (motor shaft). Then, the eccentric portions are arranged on the outer periphery of the motor shaft such that the distance from the axis of each eccentric portion to the axis of the motor shaft is equal to one another and an angle formed between line segments that connect the axis of the motor shaft to the respective axes of adjacent two eccentric portions among the first eccentric portion, the second eccentric portion, ..., and the nth eccentric portion is set to 360°/n. Furthermore, the n input members are arranged so as to be apart from each other at intervals of 360°/n around the axis O.
   For example, when the number of the input members is three, the axis of the first eccentric portion, the axis of the second eccentric portion and the axis of the third eccentric portion are sequentially arranged in one direction of the circumferential direction around the axis of the motor shaft, on an imaginary plane perpendicular to the axis of the motor shaft. Then, the eccentric portions are arranged on the outer periphery of the motor shaft such that the distance from the axis of each eccentric portion to the axis of the motor shaft is equal to one another and an angle formed between line segments that connect the axis of the motor shaft to the respective axes of adjacent two eccentric portions among the first eccentric portion, the second eccentric portion and the third eccentric portion is set to 120°. Furthermore, the three input members are arranged so as to be apart from each other at intervals of 120° around the axis of the motor shaft.
(6) In the above-described embodiments, the description has been provided on the case where the invention is applied to the four-wheel-drive vehicle 101 in which both the engine 102 and the electric motor 4 are used as drive sources. However, the invention is not limited to this. The invention may also be applied to an electric vehicle, which is a four-wheel-drive vehicle or a two-wheel-drive vehicle, in which only an electric motor is used as a drive source. In addition, the invention may also be applied to a four-wheel-drive vehicle having a first drive shaft driven by an engine and an electric motor and a second drive shaft driven by an electric motor, as in the case of the above-described embodiments.
(7) In the above-described embodiments, the description has been provided on the case where the ball bearings 54, 56 that are deep groove ball bearings are provided between the inner peripheries of the center holes 50a, 51a of the input members 50, 51, and the outer peripheries of the eccentric portions 42a, 42b such that the input members 50, 51 are rotatably supported on the eccentric portions 42a, 42b. However, the invention is not limited to this, and ball bearings other than deep groove ball bearings or roller bearings may be used instead of the deep groove ball bearings. Such a ball bearing or a roller bearing may be, for example, an angular contact ball bearing, a needle roller bearing, a long cylindrical roller bearing, a cylindrical roller bearing, a tapered roller bearing, a spherical roller bearing, or the like. In addition, in the invention, a plain bearing may be used instead of a rolling bearing.
(8) In the above-described embodiments, the description has been provided on the case where the needle roller bearing 55 that is able to contact the inner peripheral face of the pin insertion hole 50b of the input member 50 is fitted to the outer peripheral face of the output member 53 at a portion between the threaded portion 53a and the head portion 53b, and a needle roller bearing 57 that is able to contact the inner peripheral face of the pin insertion hole 51b of the input member 51 is fitted to the outer peripheral face of the output member 53 at a portion between the threaded portion 53a and the head portion 53b. The invention is not limited to this. A roller bearing other than a needle roller bearing or a ball bearing may be used instead of the needle roller bearing. Such a ball bearing or a roller bearing may be, for example, a deep groove ball bearing, an angular contact ball bearing, a cylindrical roller bearing, a long cylindrical roller bearing, a tapered roller bearing, a spherical roller bearing, or the like. In addition, in the invention, a plain bearing may be used instead of a rolling bearing.
(9) In the above-described embodiments, the deep groove ball bearing to which a preload in the axial direction is applied is used as each of the first rolling bearing, the second rolling bearing and the third rolling bearing. The invention is not limited to this. One, two or three bearings among the first rolling bearing, the second rolling bearing and the third rolling bearing may be, for example, an angular ball bearing, a tapered roller bearing, a thrust angular ball bearing, a thrust tapered roller bearing, a thrust ball bearing, or a thrust roller bearing, as a bearing to which a preload in the axial direction is applied. In addition, the first rolling bearing, the second rolling bearing and the third rolling bearing may be the bearings of the same kind, or may be the bearings of different kinds.

In the above-described embodiments, the inner ring of the first rolling bearing is fitted to the outer peripheral face of the differential case by interference fit, the outer ring of the first rolling bearing is fitted to the inner peripheral face of the shaft insertion hole of the first housing element by clearance fit, the inner ring of the second rolling bearing is fitted to the outer peripheral face of the motor shaft by interference fit, the outer ring of the second rolling bearing is fitted to the inner peripheral face of the differential case by clearance fit, the inner ring of the third rolling bearing is fitted to the outer peripheral face of the motor shaft by interference fit, and the outer ring of the third rolling bearing is fitted to the inner peripheral face of the third housing element by clearance fit. However, any of these inner rings and any of the outer rings may be fitted to the peripheral face to which they are fitted by interference fit, clearance fit, or transition fit.

### DESCRIPTION OF THE REFERENCE SYMBOLS

1, 10, 70, 100/ MOTOR DRIVING FORCE TRANSMISSION SYSTEM, 2/ HOUSING, 20/ FIRST HOUSING ELEMENT, 20a/ SHAFT INSERTION HOLE, 20b, INWARD FLANGE, 20c/ CUTOUT, 21/ SECOND HOUSING ELEMENT, 21a/ INWARD FLANGE, 22/ THIRD HOUSING ELEMENT, 22a/ SHAFT INSERTION HOLE, 22b/ CYLINDRICAL PORTION, 22c/ STEP FACE, 23/ PROTRUDING PORTION (FIRST FITTED PORTION), 24/ SEAL MEMBER, 25/ ANNULAR MEMBER, 26/SPACER, 27/ PROTRUDING PORTION (SECOND FITTED PORTION), 28/ SEAL MEMBER, 3/ REAR DIFFERENTIAL, 30/ DIFFERENTIAL CASE, 30a/ ACCOMMODATION SPACE, 30b/ SHAFT INSERTION HOLE, 30c/ FLANGE, 300c/ PIN FITTING HOLE, 30d/ STEP FACE, 30e/ RECESS HOLE, 300e/ STEP FACE, 31/ PINION GEAR SHAFT, 32/ PINION GEAR, 33/ SIDE GEAR, 34/ BALL BEARING, 340/ INNER RING, 341/ OUTER RING, 342/ ROLLING ELEMENT, 36/ BALL BEARING, 350/ INNER RING, 351/ OUTER RING, 352/ ROLLING ELEMENT, 36/ PIN, 4/ ELECTRIC MOTOR, 40/ STATOR, 41/ ROTOR, 42/ MOTOR SHAFT, 42a, 42b/ ECCENTRIC PORTION, 42c, 42d/ STEP FACE, 43/ FITTING BOLT, 44/ BALL BEARING, 45/ SLEEVE, 46/ BALL BEARING, 47/ RESOLVER, 470/ STATOR, 471/ ROTOR, 48/ SPRING, 5/ REDUCTION-TRANSMISSION MECHANISM, 50, 51/ INPUT MEMBER, 50a, 51a/ CENTER HOLE, 50b, 51b, PIN INSERTION HOLE, 50c, 51c/ EXTERNAL TEETH, 52/ ROTATION FORCE APPLYING MEMBER, 52a/ FIRST FITTING PORTION, 52b/ SECOND FITTING PORTION, 52c/ INTERNAL TEETH, 53/ OUTPUT MEMBER, 53a/ THREADED PORTION, 53b/ HEAD PORTION, 54/ BALL BEARING, 55/ NEEDLE ROLLER BEARING, 550/ RACE, 56/ BALL BEARING, 57/ NEEDLE ROLLER BEARING, 570/ RACE, 58/ SPACER, 70/ MOTOR DRIVING FORCE TRANSMISSION SYSTEM, 71/ REDUCTION-TRANSMISSION MECHANISM, 72/ ROTATION FORCE APPLYING MEMBER, 72a/ FIRST FITTING PORTION, 72b/ SECOND FITTING PORTION, 72c/ INTERNAL TEETH, 73, 74/ PROTRUDING PORTION, 80/ ROTATION FORCE APPLYING MEMBER, 80a, 80b/ RECESS GROOVE, 81/ FIRST HOUSING ELEMENT, 81a/ PROTRUDING PORTION, 82/ SECOND HOUSING ELEMENT, 82a/ PROTRUDING PORTION, 84/ FASTENING BOLT, 85/ SPRING, 86/ SPACER, 90/ FIRST HOUSING ELEMENT, 90a/ RECESS GROOVE, 91/ SECOND HOUSING ELEMENT, 91a/ RECESS GROOVE, 92/ ROTATION FORCE APPLYING MEMBER, 92a, 92b/ PROTRUDING PORTION, 101/ FOUR-WHEEL-DRIVE VEHICLE, 102/ ENGINE, 103/ TRANSAXLE, 104/ FRONT WHEEL, 105/ REAR WHEEL, 106/ REAR AXLE SHAFT, 107/ FRONT AXLE SHAFT, L,O, O₁, O₂/ AXIS, P/ SPRING FORCE (FASTENING FORCE), -P/ SPRING FORCE, P', -P'/ REACTION FORCE, δ, δ₁, δ₂/ ECCENTRIC AMOUNT

## Claims

1. A motor driving force transmission system comprising:
an electric motor that generates motor torque, and that has a motor shaft with an eccentric portion;
a reduction-transmission mechanism that is arranged on an outer periphery of the eccentric portion of the motor shaft, and that reduces a speed of the motor torque;
a differential mechanism that includes a differential mechanism portion that distributes the motor torque with a reduced speed, and a differential case that accommodates the differential mechanism portion;
a housing that accommodates the reduction-transmission mechanism, the electric motor, and the differential mechanism; and
a bearing mechanism by which the motor shaft and the differential case are coaxially and rotatably supported, wherein
the bearing mechanism includes a first rolling bearing interposed between one-side axial end portion of the housing and one-side axial end portion of the differential case, a second rolling bearing interposed between the other-side axial end portion of the differential case and one-side axial end portion of the motor shaft, and a third rolling bearing interposed between the other-side axial end portion of the housing and the other-side axial end portion of the motor shaft, and
an axial load is applied to the first rolling bearing, the second rolling bearing, and the third rolling bearing of the bearing mechanism.

2. The motor driving force transmission system according to claim 1, wherein:
each of the first rolling bearing, the second rolling bearing and the third rolling bearing has an outer ring; and
a spring having a spring force that serves as the axial load is arranged at at least one of positions between the outer ring of the first rolling bearing and the housing, between the outer ring of the second rolling bearing and the differential case, and between the outer ring of the third rolling bearing and the housing.

3. The motor driving force transmission system according to claim 1, wherein:
each of the first rolling bearing, the second rolling bearing and the third rolling bearing has an inner ring; and
a spring having a spring force that serves as the axial load is arranged at at least one of positions between the inner ring of the first rolling bearing and the differential case, between the inner ring of the second rolling bearing and the motor shaft, and between the inner ring of the third rolling bearing and the motor shaft.

4. The motor driving force transmission system according to any one of claims 1 to 3, wherein:
the housing is formed of at least two housing elements that are arranged next to each other in an axial direction thereof; and
the axial load is applied by adjusting an axial length through fastening of the at least two housing elements.

5. The motor driving force transmission system according to claim 1, wherein:
the reduction-transmission mechanism includes an input member formed of an external gear that makes circular motion with a predetermined eccentric amount upon reception of the motor torque, a rotation force applying member that is formed of an internal gear that meshes with the input member, with teeth the number of which is larger than the number of teeth of the input member, and an output member that receives a rotation force applied to the input member by the rotation force applying member and outputs the rotation force to the differential case as torque of the differential case;
the housing includes a first housing element that accommodates the differential mechanism and a second housing element that accommodates the electric motor; and
the first housing element and the second housing element are arranged next to each other in an axial direction of the electric motor via the rotation force applying member.

6. The motor driving force transmission system according to claim 5, wherein a linear expansion coefficient of the rotation force applying member is set to a linear expansion coefficient that is closer to a linear expansion coefficient of the input member than a linear expansion coefficient of each of the first housing element and the second housing element.

7. The motor driving force transmission system according to claim 5, wherein a linear expansion coefficient of each of the input member, the rotation force applying member and the output member is set to substantially the same linear expansion coefficient as a linear expansion coefficient of the differential case.

8. The motor driving force transmission system according to claim 6, wherein a linear expansion coefficient of each of the input member, the rotation force applying member and the output member is set to substantially the same linear expansion coefficient as a linear expansion coefficient of the differential case.

9. The motor driving force transmission system according to any one of claims 5 to 8, wherein:
both axial ends of the rotation force applying member respectively have a pair of fitting portions; and
one axial end of the first housing element has a first fitted portion that is fitted to one of the pair of the fitting portions, and the other axial end of the second housing element has a second fitted portion that is fitted to the other one of the pair of the fitting portions.
